# EUROPÄISCHE PATENTANMELDUNG

(11) **EP 1 344 594 A1**
(43) Veröffentlichungstag der Anmeldung: **17.09.2003**
(21) Anmeldenummer: 03012474.7
(22) Anmeldetag: 08.06.1999
(51) Int. Cl.: B23B 31/28, B23B 31/12

(54) **Spannfutter**

(30) Priorität: 02.11.1998 DE 19850334
(62) Teilanmeldung aus: 99110962.0
(71) Anmelder: Index-Werke GmbH & Co. KG Hahn & Tessky, 73730 Esslingen (DE)
(72) Erfinder: Widl, Gerhard, 8234 Feldafing (DE)
(74) Vertreter: Hoeger, Stellrecht & Partner

(57) **Zusammenfassung**

Es wird ein Spannfutter (1) für eine Werkzeugmaschine zum Einspannen eines Werkstücks (6) angegeben, das eine Spanneinrichtung mit einer Mehrzahl von Spannbacken (2), die jeweils zum Einspannen und Halten eines Werkstücks (6) aus einer Öffnungsstellung in eine Haltestellung bewegbar sind, und eine Stelleinrichtung (3) zum Bewegen der Spannbacken (2) in die Öffnungsstellung und die Haltestellung aufweist, bei dem die Stelleinrichtung (3) eine Mehrzahl von Stellgliedern aufweist, von denen jedes ein Medium aufweist, dessen eine Abmessung elektrisch und/oder magnetisch steuerbar veränderlich ist, und daß jedes Stellglied auf eine Spannbacke (2) wirkt.

## Beschreibung

Die vorliegende Erfindung betrifft ein Spannfutter für eine Werkzeugmaschine nach dem Oberbegriff des Anspruchs 1.

Der Erfindung liegt daher die Aufgabe zugrunde, ein möglichst zweckmäßiges Spannfutter zu schaffen.

Diese Aufgabe wird durch die Merkmale des Anspruchs 1 gelöst.

Weitere vorteilhafte Ausführungsformen sind Gegenstand der Unteransprüche.

Bei der Materialbearbeitung mittels Werkzeugmaschinen wie Dreh-, Fräs- oder Schleifmaschinen müssen die zu bearbeitenden Werkstücke in Aufnahmevorrichtungen wie Spannfuttern derart gehalten werden, daß die bei der Bearbeitung auftretenden Kräfte die Stellung des Werkstücks in der Aufnahmevorrichtung nicht verändern.

Bei Werkstücken, die dünnwandig oder aus anderen Gründen leicht deformierbar sind, können die in einem Spannfutter auftretenden Haltekräfte das Werkstück elastisch verformen. Beim Entnehmen des bearbeitenden Werkstücks tritt dann ein Verzug auf. Die durch die Bearbeitung erzeugte hochgenaue Werkstückgeometrie geht dadurch verloren. Ein Beispiel für diese Problematik ist die Bearbeitung von Rohlingen für Getriebe-Zahnräder, die vorher im Laufe der Herstellung gehärtet werden. Diese Härtung führt zu Durchmessertoleranzen der Rohlinge. Diese führen bei Spannen mittels bekannter Spannfutter (wie Keilhakenfuttern, Spannhülsenfuttern, Membranspannfuttern oder Dehnspannfuttern) zu unterschiedlichen elastischen Verformungen für jedes einzelne Werkstück durch das Spannen. Diese unterschiedlichen elastischen Verformungen resultieren nach der Entnahme aus dem Spannfutter durch die elastische Rückverformung in nicht akzeptablen Toleranzen der Abmessungen der bearbeiteten Zahnräder.

Bisher versucht man dieses und ähnliche Probleme dadurch zu lösen, daß ein annehmbarer Kompromiß zwischen Spannkräften und akzeptablen Toleranzen durch aufwendige Versuchsreihen für jeden einzelnen Werkstücktyp gesucht wird. Mit zunehmenden Anforderungen an die Genauigkeit der Bearbeitung im µm-Bereich und Sub-µm-Bereich ist aber selbst mit solchen Versuchen kein akzeptables Ergebnis mehr erzielbar.

Ein Vorteil der Erfindung ist darin zu sehen, daß ein Spannfutter, das in einfacher Weise eine Anpassung der Spannkräfte an unterschiedliche Werkstücke und unterschiedliche Bearbeitungen insbesondere während des Bearbeitungsvorgangs, erlaubt, zur Verfügung gestellt wird.

Eine besonders günstige Lösung hat ein Spannfutter für eine Werkzeugmaschine zum Einspannen eines Werkstücks, mit einer Spanneinrichtung mit einer Mehrzahl von Spannbacken, die jeweils zum Einspannen und Halten eines Werkstücks aus einer Öffnungsstellung in eine Haltestellung bewegbar sind, und mit einer Stelleinrichtung zum Bewegen der Spannbacken in die Öffnungsstellung und die Haltestellung zum Gegenstand, wobei die Stelleinrichtung eine Mehrzahl von Stellgliedern aufweist, von denen jedes so ausgebildet ist, daß es zur Kippbewegung um einen Drehpunkt steuerbar ist, und jeweils mit einer entsprechenden Spannbacke verbunden ist.

Bei einer weiteren vorteilhaften Ausführungsform ist vorgesehen, daß jedes der Stellglieder ein Medium aufweist, das eine elektrische und/oder magnetisch steuerbar veränderliche Abmessung aufweist.

Ferner sieht eine weitere vorteilhafte Ausführungsform vor, daß jeder der Spannbacken zusätzlich über ein Biegegelenk mit dem Basisteil des Spannfutters verbunden ist.

Eine weitere günstige Lösung hat zum Gegenstand, daß für jede Spannbacke ein Sensor zur Erfassung der Spannkraft der von der Spannbacke ausgeübten Spannkraft und/oder des von der Spannbacke gegenüber einer Grundstellung zurückgelegten Stellwegs vorgesehen ist.

Eine weitere günstige Lösung sieht vor, daß die Stelleinrichtung ein erstes Stellmittel mit einer Mehrzahl von Stellgliedern und ein zweites Stellmittel zum Bewegen der Spannbacken aufweist, daß das zweite Stellmittel die Spannbacken über einen ersten Teil des Weges zwischen der Öffnungsstellung und der Haltestellung bewegt und das erste Spannmittel über den anderen Teil und daß das zweite Spannmittel verriegelbar ist.

Weiterhin sieht eine vorteilhafte Ausführungsform einer erfindungsgemäßen Lösung ein Verfahren zur Steuerung eines Spannfutters beim Einspannen eines Werkstücks bei einer Bearbeitung vor und zwar insbesondere mit den Schritten
Erfassung der von der Werkzeugmaschine auf das eingespannte Werkstück ausgeübten Spannkraft,
Bestimmen der aufgrund der erfassten Bearbeitungskraft zur Einspannung des Werkstücks notwendigen Einspannkraft, und
individuelles Ansteuern der Stellglieder derart, daß die Spannbacken die notwendige Spannkraft ausüben.

Darüber hinaus ist günstigerweise noch vorgesehen, daß die von den einzelnen Stellgliedern ausgeübte Spannkraft bestimmt wird und die individuelle Ansteuerung mittels Rückkopplung der bestimmten Spannkraft aktualisiert wird.

Eine weitere günstige Ausführungsform des Verfahrens sieht vor, daß die Bestimmung der von den einzelnen Stellgliedern ausgeübten Spannkraft derart erfolgt, daß sie mittels eines Sensors gemessen oder aus dem von der Spannbacke zurückgelegten Stellweg berechnet wird.

Weitere Merkmale und Vorteile ergeben sich aus der folgenden Beschreibung von Ausführungsbeispielen anhand der Figuren. Von den Figuren zeigen:
- Fig. 1: eine Querschnittsdarstellung einer ersten Ausführungsform;
- Fig. 2: eine Querschnittsdarstellung einer zweiten Ausführungsform;
- Fig. 3: eine Vorderansicht der zweiten Ausführungsform;
- Fig. 4: eine Querschnittsdarstellung eines Stellmoduls, und
- Fig. 5: eine Blockdarstellung einer Steuerung.

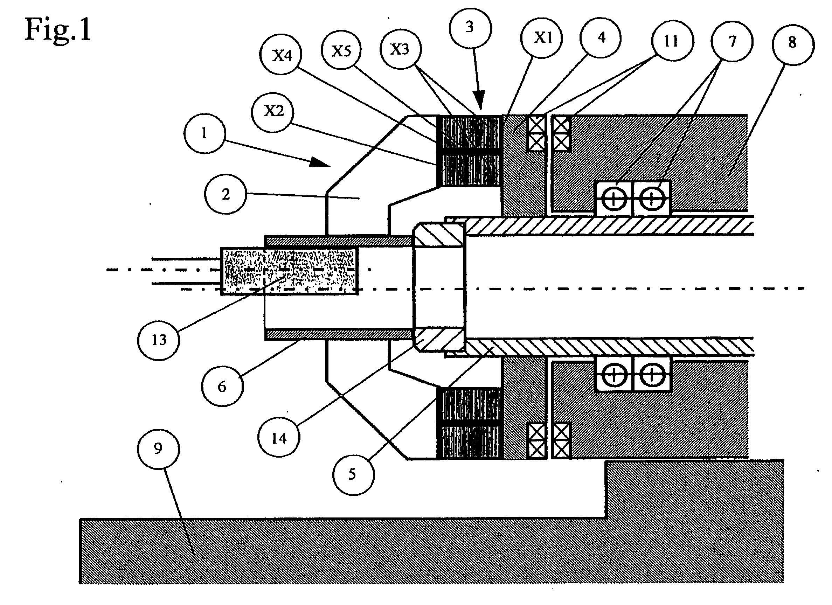

Bei der ersten Ausführungsform der Erfindung, die in Fig. 1 schematisch in einem Querschnitt längs der Drehachse A einer Spindel gezeigt ist, ist ein Spannfutter 1 mit einer Mehrzahl von Spannbacken 2 vorgesehen. Die Spannbacken 2 sind mit einer Spannfutterbasis 4 über jeweils ein Stellmodul 3 verbunden. Die Spannfutterbasis 4 ist mit der Werkstückspindel 5 der Werkzeugmaschine derart verbunden, daß die Bewegungen der Werkzeugspindel wie Drehbewegungen, Zustellbewegungen etc. an das Spannfutter 1 übertragen werden. Die Werkstückspindel 5 ist über Lager 7 mit dem Werkstückspindelaufbau 8 des Maschinenbetts 9 der Werkzeugmaschine verbunden.

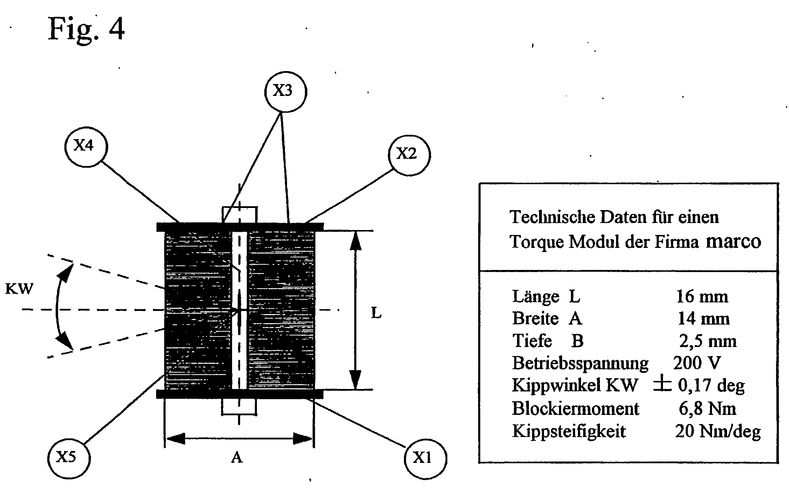

Die Stellmodule 3 bestehen jeweils aus einem Piezodrehstellelement 3. Ein solche Piezodrehstellelement 3 weist eine Grundplatte X1, die mit der Spannfutterbasis 4 verbunden ist, eine Kippplatte X2, die mit der entsprechenden Spannbacke 2 verbunden ist, Piezostellelemente X3, deren Abmessung in einer Längsrichtung in bekannter Weise durch Anlegen elektrischer Spannung steuerbar veränderlich ist, und ein Spannelement X4 auf, wobei die Stellelemente X3 derart angeordnet sind, daß ihre Längsrichtungen parallel zueinander sind und die Grundplatte X1 und die Kippplatte X2 in Längsrichtung ober- und unterhalb der Stellelemente angeordnet sind, und das Spannelement X4 mittig zwischen den beiden Stellelementen X3 angeordnet ist und die Grundplatte X1 und die Kippplatte X2 mit den zwischen diesen angeordneten Stellelementen mit einer vorbestimmten Spannung vorspannt. Die Stellelemente werden mit gegenläufigen Spannungsänderungen angesteuert, d.h. wenn an das eine Piezostellelement eine Spannungsänderung in einer Richtung (positiv oder negativ) angelegt wird, dann wird an das andere Piezostellelement eine relativ dazu entgegengesetzte (negativ oder positiv) Spannungsänderung angelegt. Daraus folgt eine gegenläufige (antisymmetrische) Längenänderung der beiden Piezostellelemente. Da die Länge des Stellmoduls 3 durch die Vorspannung mit dem Spannelement X4 festgelegt ist, wird durch die gegenläufige Längenänderung der Piezostellelemente X3 eine Drehbewegung der Kippplatte X1 um einen (virtuellen) Drehpunkt X5 verursacht. Die Stellmodule sind derart auch temperaturkompensiert, d.h. eine Temperaturänderung führt nicht zu Stellbewegungen. Ein Beispiel für Stellmodule der beschriebenen Art ist in der DE 196 46 511 C1 offenbart. Die technischen Daten eines handelsüblichen Stellmoduls dieser Art sind in der Tabelle in Fig. 4 gezeigt.

Jede Spannbacke 2 ist derart mittels des entsprechenden Stellmoduls 3 um einen (virtuellen) Drehpunkt, nämlich den Drehpunkt X5 des entsprechenden Stellmoduls bewegbar. Ein Werkstück 6 kann derart durch gesteuertes Bewegen der Spannbacken 2, wie es später beschrieben wird, gespannt werden.

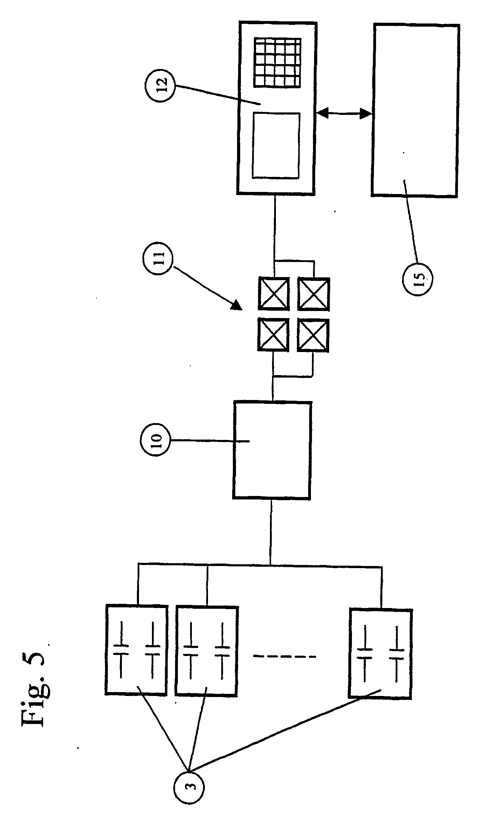

Der Steuerungsaufbau für das Spannfutter ist in Fig. 5 schematisch gezeigt. Die Stellmodule 3 weisen jeweils eine Ansteuerelektronik 10 auf, die über eine berührungslose Energie- und Datenübertragungseinrichtung 11 mit Spannung und mit Steuerdaten beliefert wird. Die Steuerdaten werden von einer Steuerung 12 für jedes der Stellmodule 3 erzeugt. Die Stellmodule 3 sind derart einzeln ansteuerbar, so daß die einzelnen Spannbacken 2 unabhängig von den anderen Spannbacken 2 in einer einfachen Weise gesteuert bewegt werden können.

Die Ansteuerelektronik 10 ist in Fig. 1 nicht gezeigt, aber sie ist bevorzugterweise zwischen und/oder hinter den Spannbacken angeordnet, so daß der Platzbedarf für die mitrotierende Ansteuerelektronik, der ohnehin gering ist, die Baugröße des Spannfutters nicht erhöht, insbesondere nicht in radialer Richtung. Die Steuerung 12 kommuniziert mit der übergeordneten Steuerung 15 der Werkzeugmaschine.

Die berührungslose Energie- und Datenübertragungseinrichtung 11 ist durch Spulen in den einander zugewandten Seiten des Werkstückspindelaufbaus (Werkstückspindelkopf) 8 und der Spannfutterbasis 4 ausgebildet, so daß auch der Platzbedarf dafür sehr gering ist. Alternativ könnte die Energie- und Datenübertragungseinrichtung kontaktierend z.B. als Schleifkontakte ausgebildet sein.

Bei der ersten Ausführungsform entfallen durch die direkte Verbindung der Spannbacken 2 mit den Stellmodulen 3 und die direkte Ansteuerung über diese alle zwischengeschalteten mechanischen Elemente. Die Anzahl der Teile sinkt dadurch deutlich und die Baugröße wird stark reduziert.

In dem Spannfutter sind bevorzugterweise Sensoren (nicht gezeigt) angeordnet, die die Spannkraft jeder Spannbacke messen. Die derart gewonnene Information wird an die Ansteuerelektronik 10 und/oder die Steuerung 12 geliefert.

Es wird nun ein Verfahren zum Steuern des Spannfutters zum Spannen von Werkstücken beschrieben. Bei der Bearbeitung wird oft zuerst eine Grobbearbeitung des Werkstücks durch das Werkzeug 13 (z.B. eine Schleifscheibe) durchgeführt, bei der aufgrund starken Spanung relativ große Bearbeitungskräfte auftreten, die wiederum große Spannkräfte erfordern. Je näher die Bearbeitung an die Zielabmessungen kommt, desto feiner wird sie und damit die Spanung und damit die notwendigen Spannkräfte. Die Steuerung 12 steuert jedes Stellmodul 3 individuell derart an, daß nach eine vorbestimmten Regel zur Bestimmung der Spannkräfte diese derart bestimmten Spannkräfte durch die jeweilige Spannbacke 2 auf das Werkstück 6 ausgeübt werden. Bei grober Bearbeitung werden entsprechend höhere Spannkräfte ausgeübt, die durch Rückkopplung mittels der Sensoren exakt ausgeübt werden können. Bei feinerer Bearbeitung werden entsprechend der vorbestimmten Regel kleinere Spannkräfte ausgeübt, die dann zu einem geringeren Verzug führen.

So können die einzelnen Spannbacken 2 mittels Rückkopplung über die Sensoren in jedem Stadium der Bearbeitung zur Ausübung einer exakt vorgegebenen Spannkraft angesteuert werden, die unabhängig von der tatsächlichen Ursprungsform des jeweiligen Werkstücks auch exakt eingehalten werden kann.

Nach einer Weiterbildung wird die Bearbeitungskraft (z.B. Spankraft), die durch das Werkzeug ausgeübt wird, erfasst. Dieses erfolgt bei rotierendem Werkzeug wie einer Schleifscheibe z.B. dadurch, daß das auf das Werkzeug ausgeübte Drehmoment durch einen geeigneten Sensor erfasst wird, z.B. durch Erfassung des Motorstroms des eine Schleifscheibe antreibenden Motors. Bei einem feststehenden Werkzeug wie einem Drehstahl wird z.B. der Motorstrom des Werkstückantriebs erfasst oder der Zustellwert aus der NC-Steuerung zur Berechnung der Bearbeitungskraft verwendet. Das Prinzip liegt darin, die Reaktionskraft (actio=reactio) des Werkstücks zu erhalten. Diese Größe wird dann als Regelparameter für die Berechnung der Haltekraft (Spannkraft), die durch das Spannfutter auf das gerade bearbeitete Werkstück auszuüben ist, verwendet.

Weiterhin können in dem Spannfutter bevorzugter Weise entweder alternativ oder zusätzlich Sensoren (nicht gezeigt) angeordnet sein, die den von jeder Spannbacke zurückgelegten Stellweg erfassen. Die derart gewonnene Information wird an die Ansteuerelektronik 10 und/oder die Steuerung 12 geliefert. Derart kann einerseits über eine Umrechnungsregel von der Ansteuerelektronik 10 und/oder der Steuerung 12 die ausgeübte Spannkraft berechnet werden. Diese Lösung kann aufgrund der Kosten der Sensoren preisgünstiger als die direkte Erfassung der Spannkraft sein. Aus der Information über den Stellweg läßt sich aber zusätzlich eine Information über die tatsächliche Deformierung des momentan gehaltenen Werkstücks gewinnen. Diese Deformationsinformation wird dann zur Berechnung der zulässigen Spannkräfte (in der vorbestimmten Regel zur Bestimmung der Spannkräfte) verwendet.

Die vorbestimmte Regel kann z.B. durch eine Berechnungsregel, die in der Software des Steuerprogramms verwirklicht ist, oder durch eine Wertetabelle, die in der Steuerung abgelegt ist und z.B. eine Zuordnung von Bearbeitungskraft, Drehzahl der Werkstückspindel und Spannkraft pro Spannbacke enthält, verwirklicht sein.

Die Messung der je Spannbacke ausgeführten Bewegung ermöglicht eine weitere Steuermöglichkeit, nämlich die entsprechende Werkstückpositionierung relativ zum Werkzeug zu verschieben (z.B. den Mittelpunkt eines Achslochs), um bestimmte Bearbeitungen auszuführen (z.B. unrunde Konturen ausgleichen).

Nach einer Weiterbildung ist auf der Werkstückspindel ein Sensor 14 zum Erfassen des Anliegens des Werkstücks vorgesehen, der mit der Steuerung 12 verbunden ist.

Die Kompensation der Fliehkräfte, die durch die Drehung des Spannfutters entstehen, kann natürlich in herkömmlicher Weise durch entsprechend angeordnete Ausgleichsgewichte an den Spannbacken, die in Fig. 1 nicht gezeigt sind erfolgen. Es ist mit der ersten Ausführungsform aber möglich, diese Fliehkräfte individuell für jede Spannbacke 2 mittels der Stellmodule 3 zu kompensieren. Ganz besonders zu bevorzugen ist eine Kombination der beiden Wege. Der Hauptteil der Fliehkräfte wird durch Gegengewichte so kompensiert, daß der Schwerpunkt der Spannbacke ungefähr im Drehpunkt X5 des Stellmoduls 3 liegt. Die Variation der Fliehkräfte, die z.B. durch den Verschleiß der Spannbacken und das dadurch erforderliche Nachschleifen der Spannbacken entsteht, wird durch die Stellmodule 3 ausgeglichen. Dieser Ausgleich erfolgt in der beschriebenen rückgekoppelten Weise. Daher können selbst Deformationen der Werkstückgeometrie, die durch derartige Fliehkraftvariationen entstehen könnten, ausgeglichen werden. Das ist bei den mittlerweile auftretenden Drehzahlen der Werkstückspindeln von bis zu 10.000 U/min ein nicht zu vernachlässigender Vorteil.

Das individuell geregelte Einstellen der Spannkräfte könnte grundsätzlich auch mittels hydraulischer oder pneumatischer Lösungen bewerkstelligt werden. Aufgrund von sogenannten Stick-Slip-Effekten, d.h. der durch die vergleichsweise hohe innere Reibung solcher Systeme in mechanischen Lagern und Stellgliedern hervorgerufenen Effekte, daß Änderungen der ausgeübten Kräfte nur in relativ großen Änderungsschritten erfolgen können, sind hochgenaue Einstellungen aber nur mit sehr hohem Aufwand möglich. Bei der ersten Ausführungsform werden aber Stellmodule verwendet, die eine relativ geringe innere Reibung aufweisen und daher mit vergleichsweise niedrigem Aufwand eine hochgenaue Steuerung erlauben.

Nach einer weiteren Weiterbildung werden die Spannbacken in herkömmlicher Weise bis zu einer vorbestimmten Stellung der Spannbacken 2 in Kontakt mit dem Werkstück 6 oder nahe des Werkstücks 6 gestellt. Dieses erfolgt z.B. dadurch, daß der Teil der Spannfutterbasis 4, an dem die Stellmodule 3 angebracht sind, als Membranspannfutter oder Keilhakenspannfutter o.ä. (nicht gezeigt) ausgebildet ist. Dieses herkömmliche Spannfutter wird dann in bekannter Weise bis zu der vorbestimmten Stellung relativ zu dem Werkstück 6 betrieben und dann in dieser Stellung verriegelt. Der weitere Stellweg der einzelnen Spannbacken 2 wird dann in der oben beschriebenen Weise eingestellt. Dadurch können die Stellmodule 3 und der Übertragungsweg ihrer Stellbewegung so ausgebildet werden, daß nur ein sehr kleiner Teil des notwendigen Gesamtstellwegs von diesen geliefert wird.

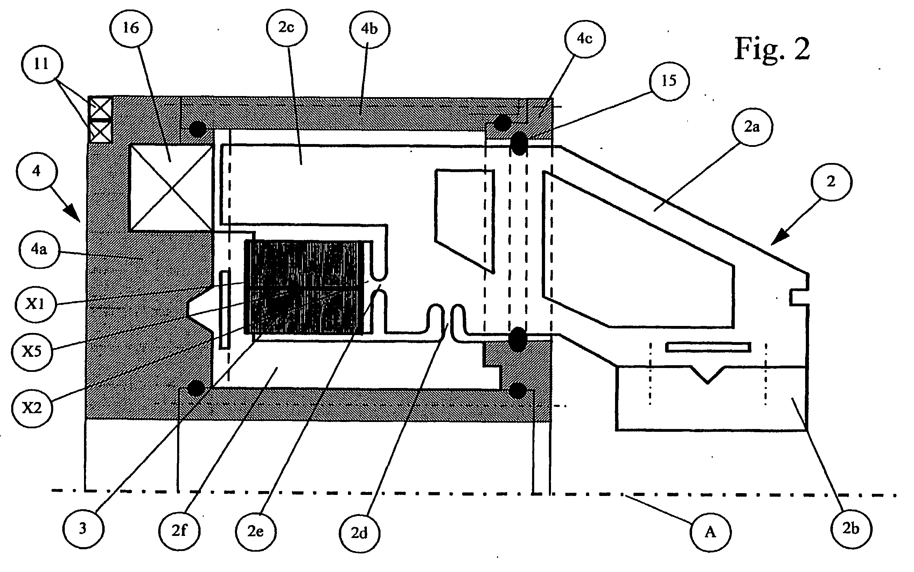

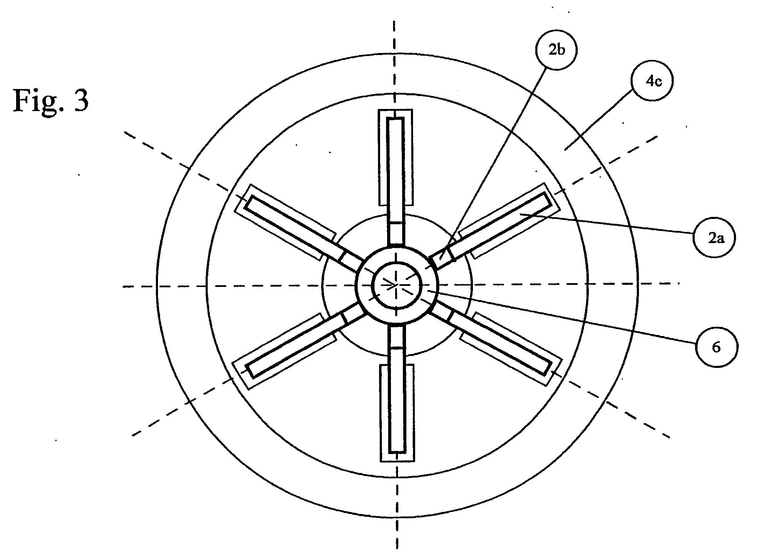

Unter Bezugnahme auf die Fig. 2 und 3 wird nun eine zweite Ausführungsform des Spannfutters beschrieben. Bis auf die nachfolgend beschriebenen Unterschiede entspricht der Aufbau und die Steuerung der zweiten Ausführungsform der ersten Ausführungsform. Abschnitte und Teile, die dieselben oder vergleichbare Funktionen haben, sind mit denselben Bezugszeichen wie bei der ersten Ausführungsform bezeichnet. Die zweite Ausführungsform der Erfindung ist in Fig. 2 schematisch in einem Querschnitt längs der Drehachse A einer Spindel so gezeigt, daß nur der oberhalb der Drehachse gelegene Abschnitt des Spannfutters 1 gezeigt ist.

Das Spannfutter 1 ist mit einer Mehrzahl von Spannbacken 2 (z.B. 6 Spannbacken, wie es in Fig. 3 gezeigt ist) vorgesehen, die jeweils einen Bewegungsabschnitt 2a, ein auswechselbares Spannbackenendstück 2b, einen Ausgleichsgewichtsabschnitt 2c, ein Biegegelenk 2d, einen Stellmodulverbindungsabschnitt 2e und einen L-förmigen Basisverbindungsabschnitt 2f aufweisen. Der Bewegungsabschnitt 2a, der Ausgleichsgewichtsabschnitt 2c, das Biegegelenk 2d, der Stellmodulverbindungsabschnitt 2e und der Basisverbindungsabschnitt 2f sind einstückig ausgebildet, wobei das Biegegelenk 2d den Bewegungsabschnitt 2a und den Basisverbindungsabschnitt 2f gelenkig verbindet. Jeweils ein Stellmodul 3 ist in eine Spannbacke 2 zwischen den Stellmodulverbindungsabschnitt 2e und den Basisverbindungsabschnitt 2f eingesetzt. Der Stellmodulverbindungsabschnitt 2e weist einen der Kippplatte X2 zugewandten und mit dieser verbundenen Plattenabschnitt auf. Der L-förmige Basisverbindungsabschnitt 2f weist die Form eines liegenden L auf, wobei das Unterteil des L eine Ausnehmung aufweist, in die die Grundplatte X1 des Stellmoduls 3 eingesetzt ist. Derart sind das Stellmodul 3 und der Stellmodulverbindungsabschnitt 2e und der Basisverbindungsabschnitt 2f kraftschlüssig verbunden, so daß Stellbewegungen (Kippbewegungen der Kippplatte X2 um den Drehpunkt X5 relativ zur Grundplatte X1) des Stellmoduls 3 zu entsprechenden Drehbewegungen des Bewegungsabschnitts 2a relativ zu dem Basisverbindungsabschnitt 2f um das Drehgelenk 2d führen.

Das Spannfutter weist eine Spannfutterbasis 4 auf, die einen Spannfutterbasisgrundabschnitt 4a, einen Spannfutterbasisstirnabschnitt 4c und einen Spannfutterbasisverbindungsabschnitt 4b, der diese verbindet, aufweist. Der L-förmige Basisverbindungsabschnitt 2f ist mit der Spannfutterbasis 4 fest verbunden, z.B. durch Vorsprünge, die in Ausnehmungen der Spannfutterbasis eingesetzt sind, und durch Schraubbolzen etc.. Dadurch sind auch die Grundplatten X1 der Stellmodule 3 der einzelnen Spannbacken 2 (über den dazwischen angeordneten Basisverbindungsabschnitt 2f) fest mit der Spannfutterbasis 4 verbunden. Der um die einzelnen Spannbacken befindliche Bewegungsfreiraum in dem Spannfutter ist durch eine Dichtung 15 gegen das Eindringen von Schmutz und Bearbeitungsrückständen wie Spänen und Schmierund Kühlmittelreste geschützt. In dem Spannfutterbasisgrundabschnitt 4a ist ein Hohlraum 16 zur Aufnahme der Ansteuerelektronik (siehe 10 in Fig. 5) des Stellmoduls 3 vorgesehen. Der zu dem Spannfutter gehörige Teil der berührungslosen Energie- und Datenübertragungseinrichtung 11 ist mit dem Hohlraum 16 verbunden.

Bei der zweiten Ausführungsform sind die Spannbacken 2 mit den Stellmodulen 3 ebenfalls direkt verbunden. Die Auslenkung der Spannbacken erfolgt direkt aber unter Umlenkung durch das Biegegelenk 2d. Die innere Reibung solcher Biegegelenke ist aber vergleichsweise klein, so daß auch mit der zweiten Ausführungsform eine sehr genaue Ansteuerung der einzelnen Spannbacken gewährleistet ist. Die Anzahl der Teile sinkt ebenfalls deutlich und die Baugröße ist ebenfalls stark reduziert.

Nach einer Weiterbildung der Erfindung ist das Biegegelenk nicht wie bei der in Fig. 2 gezeigten Ausführungsform auf der der Drehachse A zugewandten Seite der Spannbacke sondern auf der der Drehachse abgewandten Seite ausgebildet. Dadurch wird die Hauptbelastung des Biegegelenks eine Druckbelastung anstatt eine Zugbelastung.

Die zweite Ausführungsform kann die Weiterbildungen der ersten Ausführungsform aufweisen.

Die bei rotierendem Spannfutter mittels der Spannkraftsensoren und/oder Stellwegsensoren ermittelten Werte zeigen, wenn keine Bearbeitungskraft ausgeübt wird, eine eventuelle Unwucht des Spannfutters. Die derart ermittelte Unwucht kann dann durch Ausgleichsgewichte korrigiert werden. Solche Ausgleichsgewichte können z.B. als mittels Stellschrauben einstellbare Ausgleichsgewichte oder zwischen kleinen Tanks umpumpbare Flüssigkeiten vorgesehen sein.

Das Spannfutter nach den Ausführungsformen der Erfindung ermöglicht es, die ausgeübte Spannkraft in sehr feinen Anstufungen zu regeln.

Die kompakte Bauweise der Spannbacken und der Stellglieder ermöglicht es, eine große Anzahl von Spannbacken in dem Spannfutter aufzunehmen ohne die Baugröße stark zu erhöhen. Je größer die Anzahl der Spannbacken ist, desto feiner kann die ausgeübte Spannkraft auf das Werkstück verteilt werden und die auf einen bestimmten Abschnitt des Werkstücks ausgeübte Spannkraft geregelt werden.

## Patentansprüche

1. Spannfutter (1) für eine Werkzeugmaschine zum Einspannen eines Werkstücks mit einer Spanneinrichtung, die eine Mehrzahl von Spannbacken (2) umfaßt, welche zum Einspannen und Halten des Werkstücks aus einer Öffnungsstellung in eine Haltestellung bewegbar sind und mit einer Stelleinrichtung zum Bewegen der Spannbacken (2) in die Öffnungsstellung und die Haltestellung,
**dadaurch gekennzeichnet,** daß die Stelleinrichtung eine Mehrzahl von Stellgliedern (3) umfaßt, daß jedes der Stellglieder (3) ein Medium aufweist, dessen eine Abmessung elektrisch und/oder magnetisch steuerbar veränderlich ist, und daß jedes Stellglied auf eine Spannbacke (2) wirkt.

2. Spannfutter nach Anspruch 1, **dadurch gekennzeichnet, daß** den Stellgliedern (3) eine Ansteuerelektronik (10) zugeordnet ist.

3. Spannfutter nach Anspruch 2, **dadurch gekennzeichnet, daß** die Ansteuerelektronik (12) im Spannfutter angeordnet ist.

4. Spannfutter nach Anspruch 2 oder 3, **dadurch gekennzeichnet, daß** der Ansteuerelektronik (10) durch eine berührungslose Energie- und Datenübertragungseinrichtung (11) Spannung und Steuerdaten zuführbar sind.

5. Spannfutter nach Anspruch 4, **dadurch gekennzeichnet, daß** die Energieund Datenübertragungseinrichtung (11) Spulen umfaßt.

6. Spannfutter nach Anspruch 5, **dadurch gekennzeichnet, daß** eine der Spule in der Spannfutterbasis (4) angeordnet ist.

7. Spannfutter nach Anspruch 5 oder 6, **dadurch gekennzeichnet, daß** eine der Spulen in dem Werkstückspindelaufbau (8) angeordnet ist.

8. Spannfutter nach einem der Ansprüche 5 bis 7, **dadurch gekennzeichnet, daß** die Spulen in einander zugewandten Seiten der Spannfutterbasis (4) und des Werkstückspindelaufbaus (8) angeordnet sind.

9. Spannfutter nach Anspruch 4, **dadurch gekennzeichnet, daß** die Energieund Datenübertragungseinrichtung kontaktierend ausgebildet ist.

10. Spannfutter nach einem der voranstehenden Ansprüche, **dadurch gekennzeichnet, daß** eine Steuerung (12) vorgesehen ist, welche für jedes der Stellglieder (3) Steuerdaten erzeugt.

11. Spannfutter nach Anspruch 10, **dadurch gekennzeichnet, daß** mit der Steuerung (12) die Stellglieder (3) derart einzeln ansteuerbar sind, daß jeder einzelne der Spannbacken (2) unabhängig von den anderen Spannbacken (2) gesteuert bewegbar ist.

12. Spannfutter nach Anspruch 10 oder 11, **dadurch gekennzeichnet, daß** die Steuerung (12) mit einer übergeordneten Steuerung (15) der Werkzeugmaschine kommuniziert.

13. Spannfutter nach einem der voranstehenden Ansprüche, **dadurch gekennzeichnet, daß** in dem Spannfutter mindestens ein Sensor zur Messung der Spannkraft einer Spannbacke (2) angeordnet ist.

14. Spannfutter nach Anspruch 13, **dadurch gekennzeichnet, daß** für jede der Spannbacken (2) ein Sensor zur Messung der von der Spannbacke (2) ausgeübten Spannkraft vorgesehen ist.

15. Spannfutter nach Anspruch 13 oder 14, **dadurch gekennzeichnet, daß** der Sensor die gewonnene Information an die Ansteuerelektronik (10) und/oder die Steuerung (12) weiterleitet.

16. Spannfutter nach Anspruch 15, **dadurch gekennzeichnet, daß** mit der Ansteuerelektronik (10) und/oder der Steuerung (12) die Spannkraft derart steuerbar ist, daß die Spannbacken in einem Grobbearbeitungsmodus mit einer höheren Kraft auf das Werkstück (6) wirken als in einem Feinbearbeitungsmodus.

17. Spannfutter nach einem der Ansprüche 15 oder 16, **dadurch gekennzeichnet, daß** die Stellglieder (3) durch Rückkoppelung über die Sensoren für die Spannkraft derart von der Ansteuerelektronik (10) und/oder der Steuerung (12) ansteuerbar sind, daß die Spannbacken (2) mit einer exakt vorgebbaren Spannkraft auf das Werkstück (6) wirken.

18. Spannfutter nach einem der voranstehenden Ansprüche, **dadurch gekennzeichnet, daß** in dem Spannfutter mindestens ein Sensor zur Erfassung eines gegenüber einer Grundstellung zurückgelegten Stellwegs der Spannbacke (2) angeordnet ist.

19. Spannfutter nach Anspruch 18, **dadurch gekennzeichnet, daß** für jede Spannbacke (2) ein Sensor zur Erfassung des von der Spannbacke (2) gegenüger der Grundstellung zurückgelegten Stellwegs vorgesehen ist.

20. Spannfutter nach Anspruch 18 oder 19, **dadurch gekennzeichnet, daß** der Sensor einen Wert für den zurückgelegten Stellweg der Spannbacke (2) der Ansteuerelektronik (10) und/der der Steuerung (12) übermittelt.

21. Spannfutter nach Anspruch 20, **dadurch gekennzeichnet, daß** die Ansteuerelektronik (10) und/oder die Steuerung (12) basierend auf dem zurückgelegten Stellweg der Spannbacke (2) die Spannkraft errechnet.

22. Spannfutter nach einem der Ansprüche 18 bis 21, **dadurch gekennzeichnet, daß** die Steuerung (12) aus der Information über den zurückgelegten Stellweg der Spannbacke (2) eine Deformationsinformation des momentan gehaltenen Werkstücks (6) ermittelt.

23. Spannfutter nach Anspruch 22, **dadurch gekennzeichnet, daß** die Steuerung (12) aus der Deformationsinformation zulässige Spannkräfte ermittelt.

24. Spannfutter nach einem der Ansprüche 18 bis 23, **dadurch gekennzeichnet, daß** die Steuerung (12) aus der Messung des je Spannbacke (2) zurückgelegten Stellwegs eine Werkstückpositionierung relativ zum Werkzeug ermittelt.

25. Spannfutter nach einem der voranstehenden Ansprüche, **dadurch gekennzeichnet, daß** die von einem Werkzeug auf das Werkstück (6) ausgeübte Bearbeitungskraft erfassbar ist.

26. Spannfutter nach Anspruch 25, **dadurch gekennzeichnet, daß** die Bearbeitungskraft als Parameter für die Berechnung der Haltekraft des Werkstücks herangezogen wird.

27. Spannfutter nach Anspruch 25 oder 26, **dadurch gekennzeichnet, daß** die Steuerung (12) die Spannkraft pro Spannbacke aus einer Zuordnung von Bearbeitungskraft, Drehzahl der Werkstückspindel und Spannkraft pro Spannbacke ermittelt.

28. Spannfutter nach einem der Ansprüche 13 bis 27, **dadurch gekennzeichnet, daß** die bei Drehung des Spannfutters entstehenden Fliehkräfte für jede der Spannbacken (2) kompensierbar sind.

29. Spannfutter nach einem der voranstehenden Ansprüche, **dadurch gekennzeichnet, daß** jedes Stellglied als Stellmodul (3) ausgebildet ist.

30. Spannfutter nach einem der voranstehenden Ansprüche, **dadurch gekennzeichnet, daß** das Stellglied (3) an einer Spannfutterbasis (4) des Spannfutters angeordnet ist.

31. Spannfutter nach einem der voranstehenden Ansprüche, **dadurch gekennzeichnet, daß** jedes Stellglied (3) ein Piezoelement umfaßt.

32. Spannfutter nach Anspruch 31, **dadurch gekennzeichnet, daß** das Piezoelement ein Piezodrehstellelement (3) ist.

33. Spannfutter nach einem der voranstehenden Ansprüche, **dadurch gekennzeichnet, daß** durch die Stellglieder (3) nur ein Teil eines Gesamtstellwegs ausführbar ist.

34. Spannfutter nach einem der voranstehenden Ansprüche, **dadurch gekennzeichnet, daß** die Stelleinrichtung zum Bewegen der Spannbacken (2) ein erstes Stellmittel, welches die Vielzahl von Stellgliedern (3) umfaßt, und ein zweites Stellmittel aufweist.

35. Spannfutter nach Anspruch 34, **dadurch gekennzeichnet, daß** die Spannbacken (2) durch das erste Stellmittel und das zweite Stellmittel zwischen einer Öffnungsstellung und einer Haltestellung bewegbar sind.

36. Spannfutter nach Anspruch 35, **dadurch gekennzeichnet, daß** durch das zweite Stellmittel die Spannbacken (2) über einen ersten Teil des Weges zwischen der Öffnungsstellung und der Haltestellung bewegbar sind und mit dem ersten Stellmittel über den anderen Teil und daß das zweite Stellmittel bei Erreichen einer vorbestimmten Stellung der Spannbacken (2) relativ zum Werkstück (6) verriegelbar ist.

37. Spannfutter nach einem der voranstehenden Ansprüche, **dadurch gekennzeichnet, daß** die Spannbacken (2) vor Betätigung der Stellglieder in eine vorbestimmte Stellung relativ zum Werkstück (6) bringbar sind und daß ausgehend von dieser vorbestimmten Stellung ein weiterer Stellweg der einzelnen Spannbacken (2) durch die Stellglieder ausführbar ist.

38. Spannfutter nach Anspruch 37, **dadurch gekennzeichnet, daß** die vorbestimmte Stellung der Spannbacken (2) durch Bewegen der Spannfutterbasis (4) in eine der vorbestimmten Stellung der Spannbacken (2) entsprechende Stellung und Verriegelung dieser Stellung erreichbar ist.

39. Spannfutter nach einem der voranstehenden Ansprüche, **dadurch gekennzeichnet, daß** jede Spannbacke (2) um einen Drehpunkt (X5) bewegbar ist.

40. Spannfutter nach Anspruch 39, **dadurch gekennzeichnet, daß** der Drehpunkt ein virtueller Drehpunkt (X5) ist.

41. Spannfutter nach Anspruch 40, **dadurch gekennzeichnet, daß** der virtuelle Drehpunkt (X5) der virtuelle Drehpunkt des Stellgliedes (3) ist.

42. Spannfutter nach einem der voranstehenden Ansprüche, **dadurch gekennzeichnet, daß** jeder der Spannbacken (2) über ein Biegegelenk (2d) mit der Spannfutterbasis (4) gelenkig verbunden ist.

43. Spannfutter nach Anspruch 42, **dadurch gekennzeichnet, daß** jeder Spannbacken (2) über das Biegegelenk (2d) mit einem Basisverbindungsabschnitt (2f) verbunden ist.

44. Spannfutter nach Anspruch 43, **dadurch gekennzeichnet, daß** der Basisverbindungsabschnitt (2f) jedes Spannbackens (2) mit der Spannfutterbasis (4) fest verbunden ist.

45. Spannfutter nach einem der voranstehenden Ansprüche, **dadurch gekennzeichnet, daß** ein Bewegungsabschnitt (2a) jedes der Spannbacken (2) über die Spannfutterbasis (4) übersteht.

46. Spannfutter nach einem der voranstehenden Ansprüche, **dadurch gekennzeichnet, daß** jeder der Spannbacken (2) neben dem Bewegungsabschnitt (2a) einen Stellmodulverbindungsabschnitt (2e) aufweist.

47. Spannfutter nach einem der voranstehenden Ansprüche, **dadurch gekennzeichnet, daß** jeder Spannbacken (2) einen Ausgleichsgewichtsabschnitt (2c) aufweist.

48. Spannfutter nach einem der Ansprüche 43 bis 47, **dadurch gekennzeichnet, daß** die Abschnitte (2a, 2c, 2d, 2e, 2f) jedes Spannbackens (2) einstückig miteinander ausgebildet sind.

49. Spannfutter nach einem der Ansprüche 43 bis 48, **dadurch gekennzeichnet, daß** die Spannbacken mit dem Basisverbindungsabschnitt (2f) dem Biegegelenk (2d) und dem Stellmodulverbindungsabschnitt (2e) in einer Ausnehmung der Spannfutterbasis (4) angeordnet sind.

50. Spannfutter nach Anspruch 49, **dadurch gekennzeichnet, daß** die Stellglieder in der Spannfutterbasis (4) angeordnet sind.

51. Spannfutter nach einem der Ansprüche 43 bis 50, **dadurch gekennzeichnet, daß** die Stellglieder zwischen dem Basisverbindungsabschnitt (2f) und dem Stellmodulverbindungsabschnitt (2e) eingesetzt sind.

52. Spannfutter nach einem der voranstehenden Ansprüche, **dadurch gekennzeichnet, daß** jedes der Stellglieder ein Kippmodul (3) ist, das eine Grundplatte (X1),
eine Kippplatte (X2),
mindestens zwei Stellelemente (X3), deren Abmessung in einer Längsrichtung elektrisch und/oder magnetisch steuerbar veränderlich ist, und
ein Spannelement (X4)
aufweist, wobei die Stellelemente derart angeordnet sind, daß ihre Längsrichtungen parallel zueinander sind und die Grundplatte (X1) und die Kippplatte (X2) in Längsrichtung ober- und unterhalb der Stellelemente angeordnet sind, und das Spannelement (X4) mittig zwischen den mindestens zwei Stellelementen (X3) angeordnet ist und die Grundplatte (X1) und die Kippplatte (X2) mit dazwischen angeordneten Stellelementen mit einer vorbestimmten Spannung vorspannt.

53. Spannfutter nach einem der voranstehenden Ansprüche, **dadurch gekennzeichnet, daß** jedes der Stellglieder ein Kippmodul (3) ist, das in einer Längsrichtung eine Vorderseite mit einer Kippplatte (X2) und eine Hinterseite mit einer Grundplatte (X1) und dazwischen den Drehpunkt aufweist, zur Ausführung einer gesteuerten Kippbewegung der Kippplatte (X2) relativ zu der Grundplatte (X1), daß das Spannfutter ein mit einer Spindel (5) der Werkzeugmaschine verbundenes Basisteil (4) aufweist, mit dem die Grundplatte jedes Kippmoduls (3) verbunden sind, und daß die Spannbacken (2) jeweils mit der Kippplatte (X2) des zugehörigen Kippmoduls (3) verbunden sind.
